# EUROPÄISCHE PATENTSCHRIFT

(11) **EP 0 935 758 B1**
(45) Veröffentlichungstag und Bekanntmachung des Hinweises auf die Patenterteilung: **23.05.2001**
(21) Anmeldenummer: 98961012.6
(22) Anmeldetag: 16.10.1998
(51) Int. Cl.: G01R 19/165

(54) **VERFAHREN UND SCHALTUNGSANORDNUNG ZUR ÜBERWACHUNG EINES DEFINIERTEN AMPLITUDENSCHWELLENWERTES WECHSELSPANNUNGSFÖRMIGER SIGNALE**
METHOD AND CIRCUIT FOR MONITORING A DEFINED AMPLITUDE THRESHOLD VALUE OF SIGNALS FORMED BY ALTERNATING VOLTAGE
PROCEDE ET CIRCUIT POUR LA SURVEILLANCE D'UNE VALEUR SEUIL D'AMPLITUDE DEFINIE DE SIGNAUX SOUS FORME DE TENSION ALTERNATIVE

(30) Priorität: 04.11.1997 DE 19748633; 04.11.1997 DE 19748632
(43) Veröffentlichungstag der Anmeldung: 18.08.1999
(73) Patentinhaber: Moeller GmbH, 53115 Bonn (DE)
(72) Erfinder: CULCA, Horea-Stefan, D-53721 Siegburg (DE)
(86) Internationale Anmeldenummer: DE9803029
(87) Internationale Veröffentlichungsnummer: WO9923498

(56) Entgegenhaltungen:
- US-A- 3 836 854
- US-A- 4 245 150
- US-A- 4 399 414

## Beschreibung

Die vorliegende Erfindung betrifft ein Verfahren und eine Schaltungsanordnung zur Überwachung eines definierten Amplitudenschwellenwertes wechselspannungsförmiger Signale, insbesondere wechselspannungsförmige Eingangssignale elektronischer Steuergeräte wie speicherprogrammierbare Steuerungen oder Logikrelais oder wechselspannungsförmige Eingangsspannung von Netzteilen.

Eine derartige Schaltungsanordnung ist aus der US 3,836,854 bekannt. Hier wird eine Schaltungsanordnung zur Überwachung eines Amplitudenschwellenwertes wechselspannungsförmiger Signale offenbart, die einen Gleichrichter, einen Spannungsteiler und einen nachgeschalteten Komparator aufweist, so daß bei Auftreteten eines über einem festen Schwellenwert liegenden Wechselspannungs-Eingangssignal am Komparatorausgang ein erstes Schwellenwert-Überschreitungssignal erzeugt wird. Weiterhin sind Mittel zur Steuerung des ermittelten Überschreitungssignals in Form eines D-Flip-Flop vorhanden, die mit einer Multivibratorschaltung derart zusammenwirken, daß in Abhängigkeit von Impulsbreiten des Überschreitungssignals die tatsächliche Überschreitung oder Unterschreitung eines Schwellenwertes ermittelt wird.

Aus der US 4,399,414 ist eine Komparatoranordnung bekannt die als rauscharmer Pulsumformer arbeitet, wobei anhand einer Nulldurchgangserfassung und einer Schwellwerterfassung eines Wechselspannungssignales Störsignale unterdrückt werden.

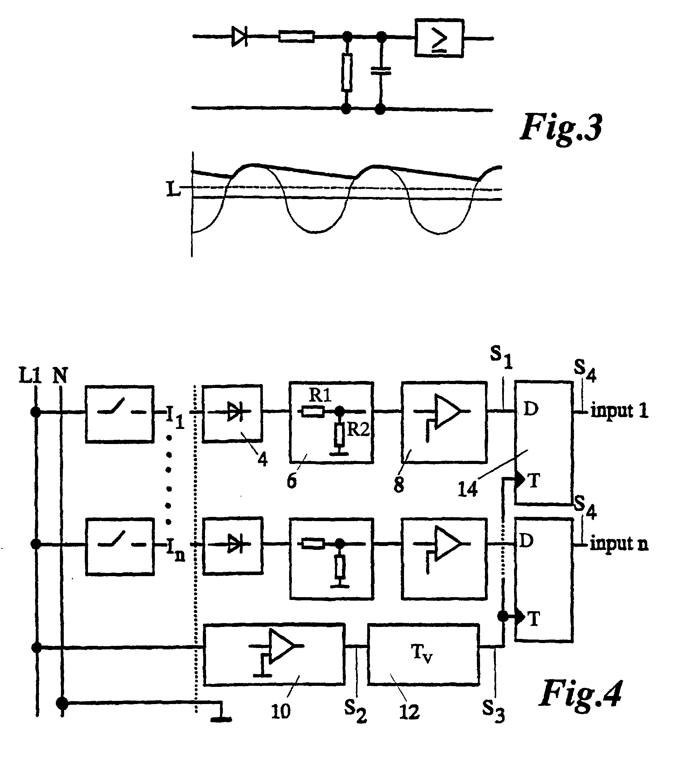

Für die Erkennung von AC-Signalen als Eingangssignale für Steuerungen ist eine Unterscheidung bzw. Erkennung eines bestimmten Grenz- bzw. Schwellenwertes unabdingbar. Eine genaue und schnelle Erfassung dieses definierten Schwellenwertes ist für verschiedene Anwendungen besonders vorteilhaft. Ein allgemein bekanntes Prinzip zur Erfassung der Unter- oder Überschreitung eines definierten Schwellenwertes wechselspannungsförmiger Eingangssignale ist in Fig. 3 veranschaulicht und besteht darin, die AC-Eingangsspannung in DC-Eingangsspannung umzuwandeln und deren Pegel dann zu messen. Hierfür findet eine Schaltung bestehend aus einem Einweg- oder Zweiweg-Gleichrichter, einem Tiefsetzer (Spannungsteiler) einem Filter (Kondensator) und einem Komparator ihre Anwendung. Der Nachteil dieser Lösung besteht darin, daß die notwendige Filterung mit dem RC-Siebglied im Eingangskreis zu langen Ein- und Ausschaltverzögerungen führt. Für eine universelle 115/230V(50 Hz)-Steuerung sind die Pegel gemäß der Normvorschrift EN 61131: V_{H} = 79V_{eff} und V_{L} = 40V_{eff} festgelegt. Die Entladung des Kondensators in der Zeit zwischen zwei Halbwellen (20 ms bei Einweggleichrichtung; 10 ms bei Zweiweggleichrichtung) muß daher kleiner als (V_{H} - V_{L})_{eff} ∗ √2 = 55V sein. Die dafür notwendige Entladungszeitkonstante τ = R ∗ C führt dazu, daß es beim Umschalten des Eingangs, von High-Signal auf Low-Signal bei maximaler Eingangsspannung (U + 10%) von 1,1 ∗ 240V ∗ √2 = 373V entsprechend lange dauert bis die Spannung des Kondensators die untere Schwelle von √2 ∗ 40V erreicht. Entsprechend lange dauert der umgekehrte Vorgang, das Laden des Kondensators beim Umschalten des Eingangs von Low- auf High-Signal, bei minimaler Eingangsspannung. In der Praxis liegen diese Verzögerungen bei mind. 50-100 ms.

Ferner werden gemäß EN 61131 (6.3.7.3) Wechselspannungsnetzteile für speicherprogrammierbare Steuerungen oder dergleichen einer Unempfindlichkeitsprüfung unterzogen derart, daß bei Unterschreitung definierter Eingangsspannungsgrenzwerte die Steuerung einen definierten Zustand einnehmen muß (z.B. Abschaltung). Umgekehrt muß die Steuerung bei der Rückkehr der Versorgungsspannung sicher einschalten. Hierfür ist eine sichere Erfassung des zu überwachenden Schwellwertes der Eingangsspannung derartiger Netzteile unerläßlich.

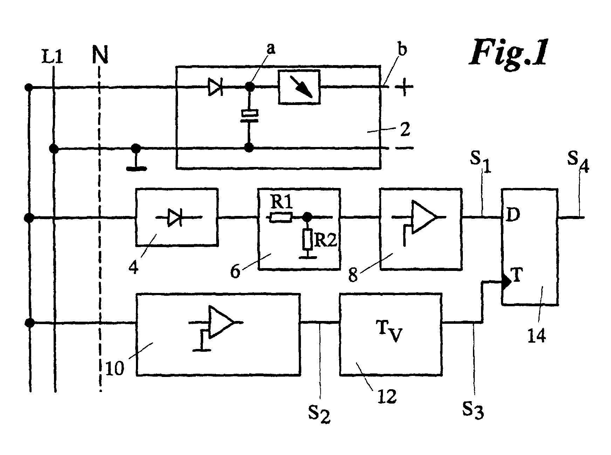

Bei herkömmlichen Netzteilen wird die Versorgungsspannung der Netzteile in der Regel nach erfolgter Gleichrichtung und Glättung abgegriffen und überwacht (siehe hierzu Fig. 1 Punkt a und b) und der Zentraleinheit ein Signal gegeben, sobald eine bestimmte Spannungsschwelle unter- bzw. überschritten worden ist. Insbesondere bei Netzteilen für Kleinsteuerungen und Logikrelais, wo aufgrund des zur Verfügung stehenden Einbauplatzes und der Kosten keine großen Glättungskondensatoren eingesetzt werden können, ist diese Methode nur unzureichend wirksam. Bei großen Stromverbrauchsunterschieden aufgrund einer unterschiedlichen Anzahl von ein- oder ausgeschalteten Ausgängen (i.d.R. Relaisausgänge mit entsprechend hohem Stromverbrauch) kommt es bei der herkömmlichen Methode zu dem Problem, daß ab einer bestimmten Last kein definiertes Ein- bzw. Abschalten mehr gewährleistet ist. So wird z.B. beim Einschalten der Versorgungsspannung bei Überschreitung der Einschaltschwelle und bei Zuschaltung von Ausgängen die Glättung der Versorgungsspannung derart verschlechtert, daß der Schwellenwert wieder unterschritten wird, die Ausgänge dann ausgeschaltet werden, die Last absinkt und die Glättung wieder verbessert wird, wodurch die Schwelle dann wieder überschritten wird und die Ausgänge wieder eingeschaltet werden u.s.w.. Dieses Spiel wiederholt sich dann, bis die Versorgungsspannung wieder einen ausreichenden Abstand zum entsprechenden Schwellenwert aufweist oder eine geringere Last vorhanden ist.

Der Erfindung liegt die Aufgabe zugrunde ein Verfahren und eine Schaltungsanordnung anzugeben, wodurch eine zuverlässige und schnelle Erfassung einer Unter- oder Überschreitung eines definierten Amplitudenschwellenwertes wechselspannungsförmiger Signale erreicht wird.

Erfindungsgemäß wird die Aufgabe durch die Merkmale der unabhängigen Ansprüche gelöst. Dabei wird erfindungsgemäß durch das Erfassen des Nulldurchgangs, eines Referenzsignals mit vorzugsweise gleicher Frequenz wie das zu überwachende wechselspannungsförmige Signal (AC-Signal), stets der Scheitelpunkt der zu überwachenden Signalhalbwelle erfaßt, mit einem Schwellenwert verglichen und bei Unter- oder Überschreitung dieses Schwellenwertes ein logisches Signal erzeugt. Vorzugsweise dienen die bei der Nulldurchgangsüberwachung gewonnen Signale der Interrupterzeugung für einen Mikroprozessor und werden von diesem weiterverarbeitet. Durch den Gegenstand der Erfindung wird eine Schwellenwerterfassung geschaffen, die es ermöglicht innerhalb kürzester Zeit eine sichere Aussage über die Amplitudenhöhe der zu überwachenden AC-Signale zu machen. Die Erfassungszeit ist hier lediglich abhängig von der Periodendauer T der AC-Signale, wobei bei einer Einweggleichrichtung die Erfassungszeit gleich der Periodendauer T und bei einer Zweiweggleichrichtung die Erfassungszeit gleich der halben Periodendauer T/2 ist.

Bei der Verwendung des erfindungsgemäßen Gegenstands für eine Überwachung von AC-Eingangssignalen elektronischer Geräte, wie speicherprogrammierbare Steuerungen, kann somit ein Einlesen von ungewollten Signalzuständen - zum Beispiel "logisch Null" durch Spannungsausfall - vermieden werden, indem bei frühzeitiger Erkennung eines Spannungsausfalls ein Signal erzeugt und weiterverarbeitet wird derart, daßein Einlesen des Signaleingänge verhindert wird.

Ferner wird bei einer anderen Verwendung der Erfindung durch eine direkte Überwachung der wechselspannungsförmigen Versorgungsspannung von Netzteilen eine zuverlässige Überwachung und ein definiertes Ein- oder Ausschalten der Netzteil-Versorgungsspannung unabhängig von der ausgangsseitigen Last gewährleistet.

Weitere Vorteile der Erfindung sind in den Unteransprüchen und der nachfolgenden Figurenbeschreibung enthalten. Es zeigen:
- Fig. 1: eine mögliche Ausführung einer Schaltungsanordnung zur Überwachung der Versorgungsspannung für ein Netzteil,
- Fig. 2: Zustandsdiagramme verschiedener Eingangs-, Zwischen- und Ausgangssignale der Schaltungsanordnung gemäß Fig. 1,
- Fig. 3: eine herkömmliche Schaltungsanordnung zur Erfassung von Schwellenwerten wechselspannungsförmiger Eingangssignale,
- Fig. 4: eine mögliche Ausführung einer erfindungsgemäßen Schaltungsanordnung zur Durchführung des erfindungsgemäßen Verfahrens (hier zur Erfassung von AC-Eingangssignalen) in schematischer Darstellung, und
- Fig. 5: Zustandsdiagramme verschiedener Eingangs-, Zwischen- und Ausgangssignale der Schaltungsanordnung gemäß Fig. 4.

Die Fig. 1 zeigt ein Netzteil 2 zur Stromversorgung eines Verbrauchers und die erfindungsgemäße Schaltungsanordnung zur Überwachung eines definierten Schwellenwertes L der Versorgungsspannung des Netzgerätes 2.
Die dargestellte Schaltungsanordnung besteht im wesentlichen aus einer Serienschaltung mit einem Gleichrichter 4, einem Tiefsetzer 6 und einem Komparator 8. Dabei ist im dargestellten Ausführungsbeispiel der Gleichrichter 4 in Form einer Diode ausgebildet, wobei diese mit ihrer Anode mit der Versorgungsspannung (Verbindung zu L1) beaufschlagt ist und mit ihrer Kathode einen aus zwei Widerständen R1, R2 bestehenden Spannungsteiler 6 versorgt. Der nachgeschaltete Komparator 8, der auf einem ersten Eingang mit einem definierbaren Schwellenwert beschaltet ist, wird auf einem zweiten Eingang (Vergleichseingang) mit dem zwischen R1 und R2 liegenden Abgriff beschaltet. Der Ausgang des Komparators 8 ist mit dem zustandsgesteuerten Eingang eines flankengesteuerten Flip-Flops 14 verbunden.
Ferner weist die Schaltungsanordnung einen Nulldurchgangsdetektor 10, und eine Verzögerungsstufe 12 auf. Dabei ist der Nulldurchgangsdetektor 10 mit seinem Überwachungseingang mit einem Referenzsignal (hier die Versorgungsspannung L1) verbunden. Der Ausgang des Nulldurchgangsdetektors 10 geht auf den Eingang einer Verzögerungsstufe 12, die wiederum mit ihrem Ausgang mit dem flankengesteuerten Eingang des Flip-Flops 14 verbunden ist.

Die Fig. 4 zeigt die erfindungsgemäße Schaltungsanordnung für die Überwachung wechselspannungsförmiger Eingangssignale (I₁....Iₙ) von Steuergeräten, wie speicherprogrammierbaren Steuerungen oder dergleichen. Die dargestellte Schaltungsanordnung ist im wesentlichen genauso aufgebaut, wie die in Fig. 1 dargestellte und zuvor beschriebene Anordnung. Dabei ist im dargestellten Ausführungsbeispiel der Gleichrichter 4 ebenfalls in Form einer Diode ausgebildet, wobei diese mit ihrer Anode, anstatt unmittelbar mit der Versorgungsspannung L1, mit dem Eingangssignal I beaufschlagt ist.

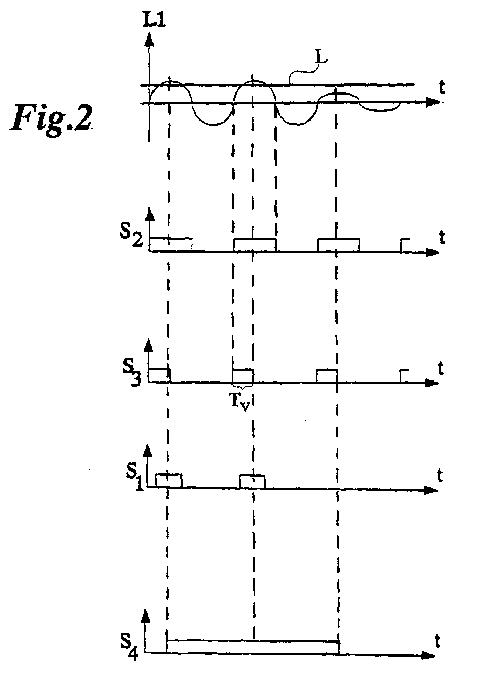

Zur Überwachung eines definierten Amplitudenschwellenwertes wechselspannungsförmiger Signale (AC-Signale) für elektronische Steuerungen findet ferner ein erfindungsgemäßes Verfahren seine Anwendung. Da insbesondere der Komparator 8 aufgrund seiner Beschaffenheit keine derart hohen negativen Signale verträgt, werden in einem ersten Schritt mit Hilfe des Gleichrichters 4 die negativen AC-Signalhalbwellen eliminiert. In der angegebenen Schaltungsanordnung findet als Komparator 8 z.B. ein C-MOS-Gatter vom Typ HC Verwendung. Dabei ist der Vergleichs-Schwellenwert L mit der halben Versorgungsspannung des C-MOS-Gatters, hier z.B. 5V/2 = 2,5V, vorgegeben. Die jeweils erforderlichen Schwellenwerte der äquivalenten wechselspannungsförmigen Eingangssignale werden durch das entsprechende Spannungsteilerverhältnis des Tiefsetzers 6 realisiert. In Abhängigkeit von einer Unter- oder Überschreitung des definierten Schwellenwertes L wird so am Ausgang des Komparators 8 ein erstes binäres Signal S₁ erzeugt, welches auf den zustandsgesteuerten Eingang des Flip-Flops 14 geschaltet wird. im dargestellten Beispiel findet ein flankengesteuertes D-Flip-Flop Verwendung, wobei das Ausgangssignal des Komparators 8 auf den D-Eingang des D-Flip-Flops geschaltet wird. Der flankengesteuerte T-Eingang des Flip-Flops 14 wird durch das von dem Nulldurchgangsdetektor 10 und der anschließenden Verzögerungsstufe 12 gebildete Signal belegt. Dabei überwacht der Nulldurchgangsdetektor 10 ein Referenzsignal vorzugsweise gleicher Phase und Frequenz wie das zu überwachende AC-Signal und bildet durch die Erfassung jedes Nulldurchgangs ein zweites binäres Signal S₂. Das Signal S₂ wird anschließend durch die Verzögerungsstufe 12 um eine Verzögerungszeit Tᵥ derart verzögert, daß im Zeitpunkt des jeweiligen Scheitelpunktes der AC-Signalamplituden ein Zustandswechsel (Flankensignal) erfolgt und so ein drittes binäres Signal S₃ gebildet wird. Dabei beträgt die Verzögerungszeit Tᵥ vorzugsweise ein Viertel der Periodendauer T des Referenzsignals. An Hand der am Ausgang des Komparators 8 und der Verzögerungsstufe 12 gebildeten Signale S₁ und S₃ wird das Flip-Flop 14 beschaltet und ein viertes binäres Signal S₄ gebildet. Das Signal S₄ bildet dann das Entscheidungsmerkmal, ob der Schwellenwert L unter- oder überschritten ist. Entsprechende Schaltvorgänge oder Maßnahmen können an dieser Stelle mit Hilfe des Signals S₄ eingeleitet werden. In einer bevorzugten Ausführung der Schaltungsanordnung werden zumindest die Verzögerungsstufe 12 und das Flip-Flop 14 innerhalb eines Mikroprozessors, in der Form von Hard- und/oder Software, realisiert.
Mit Vorteil werden der Gleichrichter 4 mit dem Komparator 8 einerseits und der Nulldurchgangsdetektor 10 andererseits jeweils in einem C-MOS-Gatter realisiert, wobei vorzugsweise die integrierten Schutzdioden des C-MOS-Gatters zur Realisierung des Gleichrichters 4 zweckentfremdet werden, so daß sie Gleichrichterfunktion haben. Bei dieser Ausführungsform ist es nicht erforderlich, wie in Fig. 1 und 4 dargestellt, den Gleichrichter 4 in Serie vor den Tiefsetzer 6 zu schalten. Hierbei wird der Gleichrichter 4 dann parallel zu dem mit Massepotential verbundenen Widerstand des Tiefsetzers 6 geschaltet, wobei der Gleichrichter 4 mit seiner Anode ebenfalls mit Massepotential und mit seiner Kathode mit dem Verbindungspunkt des Tiefsetzers 6 und dem Vergleichseingang des nachfolgenden Komparators 8 verbunden ist. Bei dieser Ausführungsform fällt der Gleichrichter 4 an der in der Fig. 2 dargestellten Stelle dann weg.

Mit Vorteil findet bei allen beschriebenen Ausführungsformen der erfindungsgemäßen Schaltungsanordnung eine zusätzliche Schutzbeschaltung gegen zu hohe Signalpegel (Eingangsspannung > Versorgungsspannung des Komparators 8) Verwendung. Hierfür wird vorzugsweise eine weitere Diode mit ihrer Anode mit dem Eingang des Komparators 8 und mit ihrer Kathode mit dem positiven Versorgungsanschluß des Komparators 8 verbunden. In einer besonders bevorzugten Ausführungsform ist sowohl die Diode zur Gleichrichtung (Gleichrichter 4) als auch die Diode zum Überspannungsschutz (nicht dargestellt) in den C-MOS-Komparator 8 integriert.
Der zuvor erwähnte Nulldurchgangsdetektor 10 ist äquivalent zu der aus Gleichrichter 4, Tiefsetzer 6 und Komparator 8 bestehenden Eingangsschaltung aufgebaut. Im Unterschied zu dieser ist der beim Nulldurchgangsdetektor 10 verwendete Tiefsetzer 6 derart dimensioniert, daß das (Spannungs-)Teilerverhältnis für den Eingang des Komparators nahezu 1:1 beträgt und der mit Massepotential verbundene Widerstand R2 sehr groß gewählt oder gar weggelassen wird.
Falls der entsprechende Mikroprozessor C-MOS- Eingänge mit integrierten Schutzdioden aufweist, ist es denkbar auf die separaten C-MOS HC-Inverter zu verzichten und die Komparatoren 8 und den Nulldurchgangsdetektor 10 mit den integrierten Mitteln des Mikroprozessors zu realisieren.

In der Fig. 2 sind die in der Schaltungsanordnung gemäß Fig. 1 gebildeten Signale S₁-S₄, sowie eine zu überwachende wechselspannungsförmige Versorgungsspannung für Netzteile, in zeitlicher Abfolge dargestellt. Dabei ist veranschaulicht, daß oberhalb des Schwellenwertes L, der zu überwachenden Versorgungsspannung, am Ausgang des Komparators 8 das Signal S1 erzeugt wird, zeitgleich hierzu, durch das Signal S3 im Scheitelpunkt des Referenzsignals, eine Flanke -zur Abfrage des Zustands am Komparatorausgang- erzeugt wird und so das vierte Signal S₄ gebildet wird. Dieses Signal kann dann für ein Verwendung finden, um bei Unter- oder Überschreitung definierter Schwellenwerte der Versorgungsschaltung sichere Schaltzustände zu gewährleisten und/oder entsprechende Zustände zu signalisieren (Ausgabe von Warnungen).

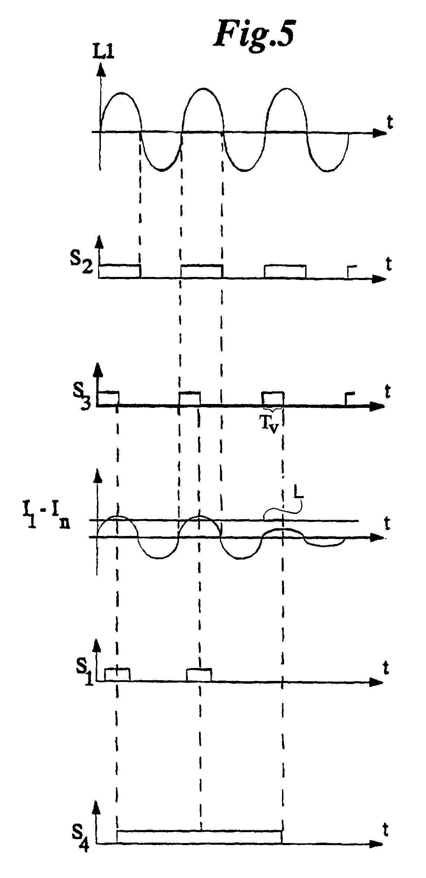

In der Fig. 5 sind die in der Schaltungsanordnung gemäß Fig. 4 gebildeten Signale S₁-S₄ sowie ein zu überwachendes wechselspannungsförmiges Eingangssignal I für eine Steuerung in zeitlicher Abfolge dargestellt. Dabei ist veranschaulicht, das oberhalb des Schwellenwertes L, des zu überwachenden Eingangssignals, am Ausgang des Komparators 8 das Signal S1 erzeugt wird, zeitgleich hierzu, durch das Signal S3 im Scheitelpunkt des Referenzsignals, eine Flanke -zur Abfrage des Zustands am Komparatorausgang- erzeugt wird und so das vierte Signal S₄ gebildet wird.

Die vorliegende Erfindung ist nicht auf die beschriebenen Ausführungsbeispiele beschränkt, sondern umfaßt auch alle im Sinne der Erfindung gleichwirkenden Ausführungsformen. So ist auch eine Schaltungsanordnung vorgesehen, bei der die AC-Signale vorzugsweise durch die Verwendung von Optokopplern galvanisch getrennt sind. Hierfür wird der Komparator 8 durch einen Optokoppler ersetzt. Der Schwellenwert kann in diesem Fall durch die Durchlass-Spannung der Eingangsdiode des Optokopplers gebildet werden. Ein Tiefsetzer 6 und ein Gleichrichter müssen natürlich ebenfalls -wie beschrieben- dem Optokoppler vorgeschaltet werden. Der beschriebene Nulldurchgangsdetektor kann ebenfalls mit Hilfe eines Optokopplers realisiert werden.

## Patentansprüche

1. Verfahren zur Überwachung eines definierten Amplitudenschwellenwertes (L) wechselspannungsförmiger Signale mit folgenden Verfahrensschritten:
a) Eliminieren negativer Signalhalbwellen,
b) Tiefsetzen der verbleibenden positiven Signalhalbwellen,
c) Prüfen, ob der Wert der tiefgesetzten Signalhalbwellen über oder unter dem Schwellenwert (L) liegt, und in Abhängigkeit davon, Erzeugen eines ersten binären Signals (S₁),
d) zeitgleich zu den Schritten a) bis c) Überwachen der Nulldurchgänge eines wechselspannungsförmigen Referenzsignals und in Abhängigkeit davon, Erzeugen eines zweiten binären Signals (S₂),
e) Erzeugen eines dritten Signals (S₃) durch Verzögern des zweiten Signals (S₂) um eine definierte Verzögerungszeit (Tᵥ) derart, daß im Zeitpunkt des jeweiligen Scheitelpunktes der positiven Signalhalbwellen ein Zustandswechsel des dritten Signals (S₃) erfolgt, und
f) Entscheiden, ob der Wert der positiven Signalhalbwelle über oder unter dem definierten Schwellenwert (L) liegt, wobei durch Auswertung des ersten Signals (S₁) im Zeitpunkt des Zustandswechsels des dritten Signals (S₃) ein viertes binäres Signal (S₄) erzeugt wird.

2. Verfahren nach Anspruch 1,
**dadurch gekennzeichnet,** daß die wechselspannungsförmigen Signale und das Referenzsignal frequenz- und phasengleich sind und die Verzögerungszeit (Tᵥ) ein Viertel der Periodendauer (T) des Referenzsignals beträgt.

3. Verfahren nach Anspruch 1 oder 2,
**dadurch gekennzeichnet,** daß eine zu überwachende wechselspannungsförmige Versorgungsspannung eines Netzteils das Referenzsignal bildet und die Verzögerungszeit (Tᵥ) ein Viertel der Periodendauer (T) des Referenzsignals beträgt.

4. Schaltungsanordnung zur Überwachung eines definierten Amplitudenschwellenwertes (L) wechselspannungsförmiger Signale mit einer Serienschaltung mit einem Gleichrichter (4), einem Tiefsetzer (6) und einem Komparator (8), wobei der Gleichrichter (4) mit seiner Anode an dem zu überwachenden Signal liegt und seine Kathode den aus mindestens zwei Widerständen (R1, R2) bestehenden, zwischen der Anode des Gleichrichters (4) und Massepotential angeordneten Tiefsetzer (6) speist und der Abgriff des Tiefsetzers (6) mit dem Vergleichseingang des Komparators (8) verbunden ist, so daß am Komparatorausgang ein erstes binäres Signal (S1) erzeugt wird,
**gekennzeichnet durch**
- einen Nulldurchgangsdetektor (10) dessen Überwachungseingang mit einem Referenzsignal beschaltet ist zur Bildung eines zweiten binären Signals (S2),
- einer dem Nulldurchgangsdetektor (10) nachgeschalteten Verzögerungsstufe (12) zur Bildung eines zeitlich begrenzten dritten binären Signals (S₃),
- mindestens ein flankengesteuertes Flip-Flop (14),
- wobei der Komparatorausgang mit einem zustandsgesteuerten Eingang des Flip-Flops (14) und der Ausgang der Verzögerungsstufe (12) mit einem flankengesteuerten Eingang des Flip-Flops (14) verbunden ist derart, daß ein zustandsunterscheidendes viertes Signal (S₄) am Ausgang des Flip-Flops (14) erzeugt wird.

5. Schaltungsanordnung zur Überwachung eines definierten Amplitudenschwellenwertes (L) wechselspannungsförmiger Signale mit
einem zwischen dem zu überwachenden Signal und Massepotential angeordneten Tiefsetzer (6), und
einem nachgeschalteten Komparator (8) wobei am Komparatorausgang ein erstes binäres Signal (S1) erzeugt wird,
**gekennzeichnet durch**
- einen parallel zu dem mit Massepotential verbundenen Widerstand des Tiefsetzers (6) angeordneten Gleichrichter (4), wobei der Gleichrichter (4) mit seiner Anode auf Massepotential liegt und mit seiner Kathode mit dem Vergleichseingang des nachgeschalteten Komparators (8) verbunden ist,
- einen Nulldurchgangsdetektor (10) dessen Überwachungseingang mit einem Referenzsignal beschaltet ist zur Bildung eines zweiten binären Signals (S2),
- eine dem Nulldurchgangsdetektor (10) nachgeschaltete Verzögerungsstufe (12) zur Bildung eines zeitlich begrenzten dritten binären Signals (S₃),
- mindestens ein flankengesteuertes Flip-Flop (14),
- wobei der Komparatorausgang mit einem zustandsgesteuerten Eingang des Flip-Flops (14) und der Ausgang der Verzögerungsstufe (12) mit einem flankengesteuerten Eingang des Flip-Flops (14) verbunden ist derart, daß ein zustandsunterscheidendes viertes Signal (S₄) am Ausgang des Flip-Flops (14) erzeugt wird.

6. Schaltungsanordnung nach Anspruch 4 oder 5,
**dadurch gekennzeichnet,** daß das Flip-Flop (14) ein D-Flip-Flop ist.

7. Schaltungsanordnung nach einem der Ansprüche 4-6,
**dadurch gekennzeichnet,** daß das/jedes Flip-Flop (14) durch Software innerhalb eines Mikrokontrollers realisiert wird.

8. Schaltungsanordnung einem der Ansprüche 4-7,
**dadurch gekennzeichnet,** daß die Verzögerungsstufe (12) durch Software innerhalb eines Mikrokontrollers realisiert wird.

9. Schaltungsanordnung nach einem der Ansprüche 4-8,
**dadurch gekennzeichnet,** daß der Gleichrichter (4) und der Komparator (8) in einem C-MOS-Gatter realisiert sind, wobei eine der integrierten Schutzdioden als Gleichrichter (4) verwendet wird.

10. Schaltungsanordnung nach einem der Ansprüche 4-9,
**dadurch gekennzeichnet,** daß die gesamte Schaltungsanordnung außer dem Tiefsetzer (6) durch Software innerhalb eines Mikrokontrollers realisiert wird.

## Claims

1. Method for monitoring a defined amplitude threshold value (L) of signals in the form of AC voltages, comprising the following method steps:
a) elimination of negative signal half-cycles,
b) reducing the level of the remaining positive signal half-cycles,
c) checking whether the value of the signal half-cycles whose levels have been reduced is above or below the threshold value (L) and, depending on this, production of a first binary signal (S₁),
d) at the same time as steps a) to c), monitoring the zero crossings of a reference signal which is in the form of an AC voltage and, depending on this, production of a second binary signal (S₂),
e) production of a third signal (S₃) by delaying the second signal (S₂) by a defined delay time (Tᵥ) such that a state change of the third signal (S₃) takes place at the time of the respective peak value of the positive signal half-cycles, and
f) deciding whether the value of the positive signal half-cycle is above or below the defined threshold value (L), with a fourth binary signal (S₄) being produced by evaluation of the first signal (S₁) at the time of the state change of the third signal (S₃).

2. Method according to Claim 1,
**characterized** in that the signals which are in the form of AC voltages and the reference signal are at the same frequency and are in phase, and the delay time (Tᵥ) is one quarter of the period duration (T) of the reference signal.

3. Method according to Claim 1 or 2,
**characterized** in that the reference signal is formed by a supply voltage, which is to be monitored and is in the form of an AC voltage, from a power supply unit, and the delay time (Tᵥ) is one quarter of the period duration (T) of the reference signal.

4. Circuit arrangement for monitoring a defined amplitude threshold value (L) of signals which are in the form of AC voltages, comprising a series circuit having a rectifier (4), a step-down converter (6) and a comparator (8), with the anode of the rectifier (4) being connected to the signal to be monitored, and the cathode of the rectifier (4) supplying the step-down converter (6), which comprises at least two resistors (R1, R2) and is arranged between the anode of the rectifier (4) and earth potential, and the tap of the step-down converter (6) being connected to the comparison input of the comparator (8) so that a first binary signal (S1) is produced at the comparator output,
**characterized by**
- a zero-crossing detector (10) whose monitoring input has a reference signal connected to it in order to form a second binary signal (S2),
- a delay stage (12), which is connected downstream of the zero-crossing detector (10), for forming a third binary signal (S₃) for a limited time,
- at least one edge-controlled flipflop (14),
- with the comparator output being connected to a state-controlled input of the flipflop (14) and the output of the delay stage (12) being connected to an edge-controlled input of the flipflop (14) such that a fourth signal (S₄), whose state is different, is produced at the output of the flipflop (14).

5. Circuit arrangement for monitoring a defined amplitude threshold value (L) of signals which are in the form of AC voltages, having a step-down converter (6) which is arranged between the signal to be monitored and earth potential, and
having a downstream comparator (8), with a first binary signal (S1) being produced at the comparator output,
**characterized by**
- a rectifier (4) which is arranged in parallel with that resistor of the step-down converter (6) which is connected to earth potential, with the anode of the rectifier (4) being connected to earth potential and the cathode of the rectifier (4) being connected to the comparator input of the downstream comparator (8),
- a zero-crossing detector (10) whose monitoring input has a reference signal connected to it in order to form a second binary signal (S2),
- a delay stage (12), which is connected downstream of the zero-crossing detector (10), for forming a third binary signal (S₃) for a limited time,
- at least one edge-controlled flipflop (14),
- with the comparator output being connected to a state-controlled input of the flipflop (14) and the output of the delay stage (12) being connected to an edge-controlled input of the flipflop (14) such that a fourth signal (S₄), whose state is different, is produced at the output of the flipflop (14).

6. Circuit arrangement according to Claim 4 or 5, **characterized** in that the flipflop (14) is a D-flipflop.

7. Circuit arrangement according to one of Claims 4-6, **characterized** in that the/each flipflop (14) is in the form of software within a microcontroller.

8. Circuit arrangement according to one of Claims 4-7, **characterized** in that the delay stage (12) is in the form of software within a microcontroller.

9. Circuit arrangement according to one of Claims 4-8, **characterized** in that the rectifier (4) and the comparator (8) are in the form of a CMOS gate, with one of the integrated protection diodes being used as the rectifier (4).

10. Circuit arrangement according to one of Claims 4-9, **characterized** in that the entire circuit arrangement apart from the step-down converter (6) is in the form of software within a microcontroller.

## Revendications

1. Procédé pour la surveillance d'une valeur seuil d'amplitude (L) définie de signaux sous forme de tension alternative avec les étapes du procédé suivantes :
a) éliminer les demi-ondes négatives du signal,
b) abaisser les demi-ondes positives qui subsistent,
c) vérifier si la valeur des demi-ondes positives abaissées se trouve au-dessus ou en-dessous de la valeur du seuil d'amplitude (L) et en fonction de cela, générer un premier signal numérique (S₁),
d) en même temps que les étapes a) à c), surveiller les passages par zéro d'un signal de référence sous forme de tension alternative et en fonction de cela, générer un deuxième signal numérique (S₂),
e) générer un troisième signal numérique (S₃) en temporisant le deuxième signal (S₂) d'une certaine durée de temporisation (Tᵥ) de telle sorte qu'à l'instant du point culminant correspondant de la demi-onde positive, il résulte un changement d'état du troisième signal numérique (S₃), et
f) décider si la valeur de la demi-onde positive du signal se trouve au-dessus ou en-dessous du seuil d'amplitude (L), le dépouillement du premier signal (S₁) à l'instant du changement d'état du troisième signal (S₃) générant un quatrième signal numérique (S₄).

2. Procédé selon la revendication 1, caractérisé en ce que les signaux sous forme de tension alternative et le signal de référence ont même fréquence et même phase et la durée de temporisation (Tᵥ) représente un quart de la durée de la période (T) du signal de référence.

3. Procédé selon la revendication 1 ou 2,
caractérisé en ce qu'une tension d'alimentation d'un réseau électrique sous forme de tension alternative à surveiller constitue le signal de référence et la durée de temporisation (Tᵥ) représente un quart de la durée de la période (T) du signal de référence.

4. Circuit pour la surveillance d'une valeur seuil d'amplitude (L) définie des signaux sous forme de tension alternative avec un branchement en série d'un redresseur (4), un abaisseur (6), et un comparateur (8), le redresseur (4) ayant son anode reliée au signal à surveiller et sa cathode alimentant l'abaisseur (6), constitué d'au moins deux résistances (R1, R2), disposé entre l'anode du redresseur (4) et le potentiel de la masse, et la prise de l'abaisseur (6) étant relié à l'entrée de comparaison du comparateur (8), de manière à générer un premier signal numérique (S₁),
caractérisé par :
- un détecteur du passage par zéro (10) dont l'entrée de surveillance est reliée à un signal de référence pour former un deuxième signal numérique (S₂),
- un étage de temporisation (12) branché en aval du détecteur du passage par zéro (10) pour former un troisième signal numérique (S₃) de durée limitée,
- au moins un flip-flop déclenché par des transitions (14),
- la sortie du comparateur reliée à une entrée de niveaux du flip-flop (14) et la sortie de l'étage de temporisation (12) à une entrée de transitions du flip-flop (14) de manière à générer un quatrième signal numérique (S₄) discriminant l'état à la sortie du flip-flop (14).

5. Circuit pour la surveillance d'une valeur seuil d'amplitude (L) définie de signaux sous forme de tension alternative avec un abaisseur (6) disposé entre le signal à surveiller et le potentiel de la masse, et un comparateur (8) branché en aval, un premier signal numérique (S₁) étant généré à la sortie du comparateur,
caractérisé par :
- un redresseur (4), disposé en parallèle avec la résistance de l'abaisseur (6) branchée à la masse, le redresseur (4) ayant son anode reliée au potentiel de la masse et sa cathode étant reliée à l'entrée de comparaison du comparateur (8) branché en aval,
- un détecteur du passage par zéro (10) dont l'entrée de surveillance est reliée à un signal de référence pour former un deuxième signal numérique (S₂),
- un étage de temporisation (12) branché en aval du détecteur du passage par zéro (10) pour former un troisième signal numérique (S₃) de durée limitée,
- au moins un flip-flop déclenché par des transitions (14),
- la sortie du comparateur reliée à une entrée de niveaux du flip-flop (14) et la sortie de l'étage de temporisation (12) à une entrée de transitions du flip-flop (14) de manière à générer un quatrième signal numérique (S₄) discriminant l'état à la sortie du flip-flop (14).

6. Circuit selon la revendication 4 ou 5,
caractérisé en ce que le flip-flop (14) est un flip-flop de type D.

7. Circuit selon l'une des revendications 4-6,
caractérisé en ce que le/chaque flip-flop (14) est réalisé par logiciel à l'intérieur d'un microcontrôleur.

8. Circuit selon l'une des revendications 4-7,
caractérisé en ce que l'étage de temporisation (12) est réalisé par logiciel à l'intérieur d'un microcontrôleur.

9. Circuit selon l'une des revendications 4-8,
caractérisé en ce que le redresseur (4) et le comparateur (8) sont réalisés dans une porte CMOS, l'une des diodes de protection intégrées étant utilisée comme redresseur (4).

10. Circuit selon l'une des revendications 4-9,
caractérisé en ce que l'ensemble du circuit mis à part l'abaisseur (6) est réalisé par logiciel à l'intérieur d'un microcontrôleur.
